# EUROPÄISCHE PATENTSCHRIFT

(11) **EP 1 500 356 B1**
(45) Veröffentlichungstag und Bekanntmachung des Hinweises auf die Patenterteilung: **03.05.2006**
(21) Anmeldenummer: 03291807.0
(22) Anmeldetag: 22.07.2003
(51) Int. Cl.: A47J 27/62, A47J 37/12

(54) **Verfahren und Vorrichtung zum Steuern oder Regeln einer Druckbedingung beim Garen eines Lebensmittels im Garraum einer Gareinrichtung**
Method and apparatus for controlling and regulating of the pressure conditions during cooking of food in a cooking chamber of a cooking appiance
Methode et appareil de commande et de réglage des conditions de pression pendant la cuisson d'un produit alimentaire dans un four de cuisson

(43) Veröffentlichungstag der Anmeldung: 26.01.2005
(73) Patentinhaber: Frima SA, 68271 Wittenheim Cedex (FR); Rational AG, 86899 Landsberg/Lech (DE)
(72) Erfinder: Gluck, Pascal, 68100 Mulhouse (FR); Wiedemann, Peter, 86836 Klosterlechfeld (DE)
(74) Vertreter: Weber-Bruls, Dorothée

(56) Entgegenhaltungen:
- GB-A- 2 027 612
- GB-A- 2 067 325
- US-A- 4 246 955
- US-A- 4 869 233
- US-A1- 2002 139 253

## Beschreibung

Die Erfindung liegt auf dem Gebiet von Verfahren und Vorrichtungen zum Garen eines Lebensmittels mit Hilfe einer Gareinrichtung, insbesondere eines Drucktiegels.

Gareinrichtungen werden zum Zubereiten von Speisen genutzt, indem ein Lebensmittel in einem Garraum eingebracht und mittels des Einstellens und des Regelns bestimmter Garbedingungen gegart wird. Zum Garen des Lebensmittels wird dieses in dem Garraum erhitzt. Zu diesem Zweck wird dem Garraum mit Hilfe eines Heizelements Wärmeenergie zugeführt. Es sind Gargeräte bekannt, die über einen druckdicht verschließbaren Garraum verfügen, so daß ein Druckgaren des Lebensmittels ausgeführt werden kann, bei dem in dem Garraum ein im Vergleich zum Umgebungsdruck erhöhter Innendruck erzeugt wird, um den Garprozeß zu beschleunigen und das Lebensmittel gut durch zu garen. Der erhöhte Innendruck in dem Garraum wird hierbei mit Hilfe des Verdampfens von Wasser erzeugt.

Aus der DE 199 55 820 A1 ist ein Gargerät mit druckfestem Garraum und Drucklufterzeugereinheit bekannt. Bei dem bekannten Gargerät wird der Druck im Garraum mit Hilfe eines Drucksensors erfaßt. Die Regulierung des Innendrucks in dem Garraum erfolgt mit Hilfe der Drucklufterzeugereinheit. Darüber hinaus ist bekannt, den Innendruck im Garraum mit Hilfe von Druckablaßeinrichtungen zu regulieren, bei denen es sich beispielsweise um eine Ventileinrichtung zum Ablassen von Dampf aus dem Garraum handelt.

Aus der US 4,246,955 A ist ein Verfahren zum Steuern oder Regeln einer Druckbedingung beim Garen eines Lebensmittels in einem Garraum und eine Gareinrichtung mit einer Druckmeßeinrichtung, die die Druckbedingungen im Garraum mißt und an eine Steuer- und Regeleinrichtung überträgt, bekannt. Die Gareinrichtung weist ferner eine Temperaturmeßeinrichtung auf, um die Dampftemperatur innerhalb des Garraums zu ermitteln und an die Steuer- und Regeleinrichtung zu übertragen, mit der ein Heizelement gesteuert werden kann.

Aus der GB 2,067,325 A ist ein Verfahren zum Überwachen des Garens von Nahrungsmitteln in einem Dampfdruckgargerät bekannt, wobei wenigstens eine der Variablen Temperatur oder Druck innerhalb des Dampfdruckgargeräts gemessen und so weiterverarbeitet wird, daß während der gesamten Garzeit ein Signal erzeugt wird, dessen Wert abhängig ist von wenigstens einer Messung der Variablen Temperatur oder Druck, um schließlich das Ende der Garzeit zu bestimmen.

Die US 2002/0139253 A1 beschreibt ein Verfahren zum Betreiben eines Dampfdruckgargeräts, das eine Steuer- und Regeleinrichtung umfaßt, um ein Heizelement zu betreiben, wobei die Steuer- und Regeleinrichtung in Abhängigkeit von dem Dampfdruck an einem Dampfauslaß des Gargeräts betrieben wird. Neben der Bestimmung des Dampfdrucks kann über einen Temperatursensor auch die Dampftemperatur in dem Garraum ermittelt werden.

Aus der US 4,869,233 ist schließlich ein Verfahren bekannt, um innerhalb eines Gargeräts den Zeitpunkt bzw. Zustand zu bestimmen, wann Flüssigkeit darin kocht. Dies erfolgt über eine Bestimmung der akustischen Energieemission.

Aufgabe der Erfindung ist es, ein verbessertes Verfahren und eine verbesserte Vorrichtung zum Regeln einer Druckbedingung beim Garen eines Lebensmittels in einem Garraum einer Gareinrichtung anzugeben, bei denen eine feiner abgestimmte Regulierung und Aufrechterhaltung der druckbeeinflußten Garbedingungen ermöglicht ist.

Diese Aufgabe wird erfindungsgemäß durch ein Verfahren nach dem unabhängigen Anspruch 1 und eine Vorrichtung nach dem unabhängigen Anspruch 6 gelöst.

Bevorzugte Ausführungsformen des erfindungsgemäßen Verfahrens sind in den Ansprüchen 2 bis 5 beschrieben. In den Ansprüchen 7 bis 11 sind bevorzugte Ausführungsbeispiele der erfindungsgemäßen Vorrichtung beschrieben.

Die Erfindung umfaßt den Gedanken, zum Regeln des Drucks in dem Garraum der Gareinrichtung mit Hilfe einer Temperaturmeßeinrichtung zumindest eine Temperaturmeßgröße zu messen und hieraus ein Temperaturmeßsignal abzuleiten, welches von der Temperaturmeßeinrichtung an eine Steuer- oder Regeleinrichtung, vorzugsweise an eine Regeleinrichtung, übermittelt wird. Die Regeleinrichtung ist darüber hinaus mit einem Drucksensor zum Messen einer Druckmeßgröße für den Garraum verbunden, so daß von der Druckmeßeinrichtung ein aus der Druckmeßgröße abgeleitetes Druckmeßsignal an die Regeleinrichtung übermittelt werden kann. In Abhängigkeit von dem Druckmeßsignal und dem Temperaturmeßsignal wird mit Hilfe der Regeleinrichtung ein Temperaturregelsignal erzeugt und an ein Heizelement übertragen, mit dem eine zum Heizen des Garraums erzeugte Heizleistung dem Temperatursteuersignal entsprechend geregelt wird. Mit Hilfe des Drucksensors wird dann eine geänderte Druckmeßgröße für den Garraum gemessen, die eine infolge der dem Temperaturregelsignal entsprechend geregelten Heizleistung geänderte Druckbedingung im Garraum anzeigt. Auf diese Weise wird mittels der Regelung der Heizleistung der Druck in dem Garraum unter Berücksichtigung des gemessenen Druckmeßsignals eingestellt. Das Messen der zumindest einen Temperaturmeßgröße umfaßt dabei das Messen einer Flüssigkeitstemperatur einer Flüssigkeit in dem Garraum. Hierdurch liefert die Temperaturmessung Informationen darüber, in welchem Umfang Heizenergie zugeführt werden muß, um die Flüssigkeit in dem Garraum zu verdampfen, was zu einer Druckerhöhung führen würde.

Der mit der Erfindung gegenüber dem Stand der Technik erreichte Vorteil besteht darin, daß mittels des Regelns der Heizleistung in Abhängigkeit von dem gemessenen Druck in dem Garraum eine feiner abgestimmte Beeinflußung des Drucks im Garraum während des Garprozesses möglich ist. Im Vergleich zu bekannten Regelmechanismen zur Einstellung des Drucks im Garraum, beispielsweise mit Hilfe des Ablassens von Dampf aus dem Garraum, kann die Heizleistung mit Hilfe des Heizelements in sehr fein abgestuften Schritten reguliert werden. Während mit Hilfe des Ablassens von Dampf aus dem Garraum nur eine Druckverminderung erreicht werden kann, ist die Einstellung der Heizleistung sowohl für das Erhöhen als auch das Vermindern des Drucks in dem Garraum nutzbar.

Eine zweckmäßige Ausgestaltung der Erfindung sieht vor, daß das Messen der zumindest einen Temperaturmeßgröße das Messen einer Dampftemperatur von Dampf aus dem Garraum umfaßt. Auf diese Weise liefert die Temperaturmessung unmittelbar Informationen über den den Druck im Garraum bestimmenden Dampf, der in der Regel von in dem Garraum eingebrachtem verdampften Wasser und/oder verdampfter Flüssigkeit des Lebensmittels erzeugt wird.

Der momentane Zustand des Heizelements kann bei einer zweckmäßigen Ausführungsform der Erfindung in den Regelprozeß zum Regeln des Drucks im Garraum einbezogen werden, indem das Messen der zumindest einen Temperaturmeßgröße das Messen einer Heizelement-Temperatur des Heizelements umfaßt.

Eine mit wenig Aufwand und kostengünstig ausführbare Erweiterung des Regelmechanismus ist bei einer bevorzugten Fortbildung der Erfindung dadurch erreicht, daß mit Hilfe der Regeleinrichtung ein Druckregelsignal erzeugt und an eine Dampfablaßeinrichtung zum Ablassen von Dampf aus dem Garraum übertragen wird. Hierdurch ist es insbesondere möglich, kurzfristig eine Druckminderung in dem Garraum zu erreichen.

Eine effiziente Nutzung der zum Garen verwendeten Flüssigkeit ist bei einer vorteilhaften Ausführungsform der Erfindung dadurch erreicht, daß der Dampf mit Hilfe der Dampfablaßeinrichtung in eine Ablöscheinrichtung abgeleitet wird. Der abgelassene Dampf kann in der Ablöscheinrichtung kondensieren, und die hierbei entstehende Flüssigkeit kann wieder verwendet werden, beispielsweise zum Reinigen des Garraums.

Die im Zusammenhang mit den abhängigen Ansprüchen zu der Vorrichtung zum Garen eines Lebensmittels aufgeführten Merkmale von jeweiligen Fortbildungen der Erfindung weisen die in Verbindung mit den zugehörigen abhängigen Verfahrensansprüchen genannten Vorteile entsprechend auf.

Die Erfindung wird im folgenden anhand von Ausführungsbeispielen unter Bezugnahme auf eine aus einer einzigen Figur bestehende, schematische Zeichnung näher erläutert.

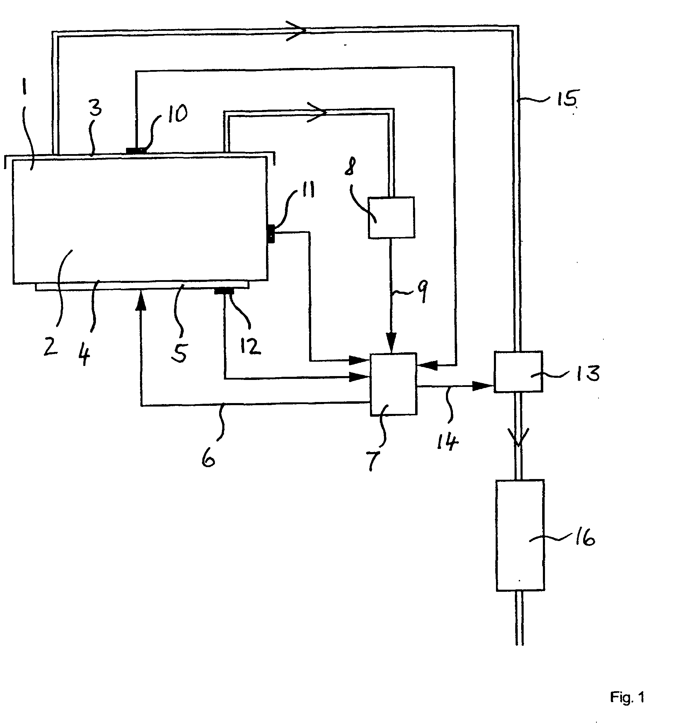

Figur 1 zeigt eine schematische Darstellung einer Vorrichtung zum Garen eines Lebensmittels. Hierbei ist ein Drucktiegel 1 mit einem Garraum 2 vorgesehen, wobei der Garraum 2 in dem Drucktiegel 1 mit Hilfe eines Deckels 3 druckfest verschließbar ist. Mit Hilfe des Öffnens und Schließens des Deckels 3 kann das Lebensmittel in den Garraum 2 eingebracht oder aus diesem entnommen werden. Unterhalb eines Bodens 4 des Drucktiegels 1 ist ein Heizelement 5 zum Erzeugen von Heizenergie angebracht, die zum Erhitzen des Garraums 2 dient. Das Heizelement 5 ist über eine Steuersignalleitung 6 mit einer Steuereinrichtung 7 verbunden, so daß das Heizelement 5 über die Steuersignalleitung 6 von der Steuereinrichtung 7 erzeugte Temperatursteuersignale empfangen kann, die die Abgabe von Heizenergie durch das Heizelement 5 regeln. Bei dem Heizelement 5 kann es sich um eine beliebige Einrichtung zum Erzeugen von Heizenergie handeln, beispielsweise eine elektrische Heizschleife oder einen Gasbrenner. Mit Hilfe des Temperatursteuersignals wird in diesen Fällen der elektrische Strom durch die elektrische Heizschleife bzw. die Menge verbrannten Gases geregelt.

Die temperatursteuersignalbasierte Regelung der von dem Heizelement 5 abgegebenen Heizenergie regelt den Druck im Garraum 2, indem insbesondere mehr oder weniger Dampf aufgrund verdampfter Flüssigkeit in dem Garraum 2 erzeugt wird. Das zum Regeln der von dem Heizelement 5 abgegebenen Heizenergie genutzte Temperatursteuersignal wird von der Steuereinrichtung 7 in Abhängigkeit von mehreren an die Steuereinrichtung 7 übertragenen Meßsignalen erzeugt. So wird zunächst mit Hilfe eines Drucksensors 8 eine Druckmeßgröße gemessen, die den Druck im Garraum 2 charakterisiert. Der Drucksensor 8 leitet aus der gemessenen Druckmeßgröße ein Druckmeßsignal ab und überträgt es über eine Druckmeßsignalleitung 9 an die Steuereinrichtung 7. Gemäß Figur 1 wird das Druckmeßsignal mit Hilfe des Drucksensors 8 im Bereich des Deckels 3 erfaßt.

Aus einem mit Hilfe der Steuereinrichtung 7 durchgeführten Ist-/Sollwert-Vergleich bezüglich des Drucks in dem Garraum 2 wird dann unter Berücksichtigung einer oder mehrerer Temperaturmeßsignale das Temperatursteuersignal erzeugt, welches über die Steuersignalleitung 6 an das Heizelement 5 übermittelt wird. Das eine oder die mehreren Temperaturmeßsignale können neben einer Erzeugung über eine Flüssigkeitstemperatur-Meßeinrichtung 11 zum Messen einer Flüssigkeitstemperatur und zum Erzeugen eines Flüssigkeitstemperatur-Meßsignals mit Hilfe einer Temperaturmeßeinrichtung erzeugt werden, die bei der in Figur 1 dargestellten Ausführungsform eine Dampftemperatur-Meßeinrichtung 10 zum Erfassen einer Dampftemperatur und zum Erzeugen eines Dampftemperatur-Meßsignals sowie einen weiteren Temperatursensor 12 zum Messen einer Heizelement-Temperatur und zum Erzeugen eines Heizelement-Meßsignals umfaßt. Die Dampftemperatur-Meßeinrichtung 10, die Flüssigkeitstemperatur-Meßeinrichtung 11 und der weitere Temperatursensor 12 sind jeweils mit der Steuereinrichtung 7 verbunden. Die Steuereinrichtung 7, welche aus geeigneten Hardware-und Softwarekomponenten gebildet ist, beispielsweise auf Basis eines üblichen Mikroprozessors, kann in Abhängigkeit vom Anwendungsfall so konfiguriert werden, daß neben dem Flüssigkeitstemperatur-Meßsignal von der Flüssigkeitstemperatur-Meßeinrichtung 11 das Dampftemperatur-Meßsignal von der Dampftemperatur-Meßeinrichtung 10 und/oder das Heizelement-Meßsignal von dem weiteren Temperatursensor 12 bei der Erzeugung des an das Heizelement 5 zu übermittelnden Temperartursteuersignals berücksichtigt werden. Die verschiedenen Temperaturmeßsignale liefern unterschiedliche Informationen über Betriebsparameter in Verbindung mit dem Garraum 2, welche den Druck im Garraum 2 beeinflussen.

Gemäß Figur 1 ist die Steuereinrichtung 7 weiterhin mit einer Ventileinrichtung 13 über eine weitere Steuersignalleitung 14 verbunden, über welche ein von der Steuereinrichtung 7 erzeugtes Drucksteuersignal zum Steuern der Ventileinrichtung 13 übermittelt wird. Die Ventileinrichtung 13 ist über eine Dampfablaßleitung 15 mit dem Garraum 2 verbunden, so daß mit Hilfe des Öffnens der Ventileinrichtung 13 Dampf aus dem Garraum 2 über die Dampfablaßleitung 15 und die Ventileinrichtung 13 in einen Ablöschkasten 16 abgelassen werden kann. In dem Ablöschkasten 16 kann der abgelassene Dampf dann kondensieren. Das mit Hilfe der Steuereinrichtung 7 erzeugte Drucksteuersignal für die Ventileinrichtung 13 wird in Abhängigkeit von dem Druckmeßsignal des Drucksensors 8 und dem Flüssigkeitstemperatur-Meßsignal der Flüssigkeitstemperatur-Meßeinrichtung 11 und ggf. einem oder mehreren der weiter zur Verfügung stehenden Temperaturmeßsignale erzeugt, nämlich dem Dampftemperatur-Meßsignal der Dampftemperatur-Meßeinrichtung 10 und/oder dem Heizelement-Meßsignal des weiteren Temperatursensors 12.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Steuern oder Regeln einer Druckbedingung beim Garen eines Lebensmittels in einem Garraum (2) einer Gareinrichtung, insbesondere eines Drucktiegels, bei dem mit Hilfe einer Druckmeßeinrichtung (8) eine von der Druckbedingung in dem Garraum (2) abhängige Druckmeßgröße gemessen und ein von der Druckmeßgröße abgeleitetes Druckmeßsignal von der Druckmeßeinrichtung (8) an eine Steuer- oder Regeleinrichtung (7) übertragen wird, mit Hilfe einer Temperaturmeßeinrichtung (10; 11; 12) zumindest eine Temperaturmeßgröße gemessen wird, ein von der zumindest einen Temperaturmeßgröße abgeleitetes Temperaturmeßsignal von der Temperaturmeßeinrichtung (10; 11; 12) an die Steuer- oder Regeleinrichtung (7) übertragen wird, in Abhängigkeit von dem zumindest einen Temperaturmeßsignal und dem Druckmeßsignal mit Hilfe der Steuer- oder Regeleinrichtung (7) ein Temperatursteuer- oder- regelsignal erzeugt und an ein Heizelement (5) übertragen wird, mit dem eine zum Heizen des Garraums (2) erzeugte Heizleistung dem Temperatursteuer- oder- regelsignal entsprechend gesteuert oder geregelt wird, und eine infolge der gesteuerten oder geregelten Heizleistung geänderte Druckmeßgröße für den Garraum (2) mit Hilfe der Druckmeßeinrichtung (8) erfaßt wird, **dadurch gekennzeichnet, daß** das Messen der zumindest einen Temperaturmeßgröße das Messen einer Flüssigkeitstemperatur von Flüssigkeit in dem Garraum (2) umfaßt.

2. Verfahren nach Anspruch 1, **dadurch gekennzeichnet, daß** das Messen der zumindest einen Temperaturmeßgröße das Messen einer Dampftemperatur von Dampf aus dem Garraum (2) umfaßt.

3. Verfahren nach Anspruch 1 oder 2, **dadurch gekennzeichnet, daß** das Messen der zumindest einen Temperaturmeßgröße das Messen einer Heizelement-Temperatur des Heizelements (5) umfaßt.

4. Verfahren nach einem der vorangehenden Ansprüche, **dadurch gekennzeichnet, daß** mit Hilfe der Steuer- oder Regeleinrichtung (7) in Abhängigkeit von dem zumindest einen Temperaturmeßsignal und dem Druckmeßsignal ein Drucksteuer- oder- regelsignal erzeugt und an eine Dampfablaßeinrichtung (13, 15) zum Ablassen von Dampf aus dem Garraum (2) übertragen wird.

5. Verfahren nach Anspruch 4, **dadurch gekennzeichnet, daß** der Dampf mit Hilfe der Dampfablaßeinrichtung (13, 15) in eine Ablöscheinrichtung (16) abgeleitet wird.

6. Vorrichtung zum Garen eines Lebensmittels, insbesondere in einem Drucktiegel, mit einem Garraum (2) zum Aufnehmen des Lebensmittels, einer Druckmeßeinrichtung (8) zum Messen einer von einer Druckbedingung in dem Garraum (2) abhängigen Druckmeßgröße und zum Ableiten eines Druckmeßsignals von der Druckmeßgröße, einer Druckmeßsignalleitung (9) zum Verbinden der Druckmeßeinrichtung (8) mit einer Steuer- oder Regeleinrichtung (7) für eine Übertragung des Druckmeßsignals von der Druckmeßeinrichtung (8) an die Steuer- oder Regeleinrichtung (7), einer Temperaturmeßeinrichtung (10; 11; 12) zum Messen zumindest einer Temperaturmeßgröße und zum Ableiten eines an die Steuer- oder Regeleinrichtung (7) zu übermittelnden Temperaturmeßsignals aus der Temperaturmeßgröße, einer von der Steuer- oder Regeleinrichtung (7) umfaßten Einheit zum Erzeugen eines Temperatursteuer- oder- regelsignals in Abhängigkeit von dem Druckmeßsignal und dem Temperaturmeßsignal, und einer Steuer- oder Regelsignalleitung (6) zum Verbinden der Steuer- oder Regeleinrichtung (7) mit einem Heizelement (5) für eine Übertragung des Temperatursteuer- oder- regelsignals von der Steuer- oder Regeleinrichtung (7) an das Heizelement (5), mit dem zum Steuer oder Regeln der Druckbedingung in dem Garraum (2) eine zum Heizen des Garraums (2) erzeugte Heizleistung dem Temperatursteuersignal entsprechend steuerbar oder regelbar ist, **dadurch gekennzeichnet, daß** die Temperaturmeßeinrichtung einen Flüssigkeitstemperatur-Sensor (11) zum Messen einer Flüssigkeitstemperatur in dem Garraum (2) umfaßt.

7. Vorrichtung nach Anspruch 6, **dadurch gekennzeichnet, daß** die Temperaturmeßeinrichtung einen Dampftemperatur-Sensor (10) zum Messen einer Dampftemperatur von Dampf aus dem Garraum (2) umfaßt.

8. Vorrichtung nach einem der Ansprüche 6 oder 7, **dadurch gekennzeichnet, daß** die Temperaturmeßeinrichtung einen weiteren Temperatursensor (12) zum Messen einer Temperatur des Heizelements (5) umfaßt.

9. Vorrichtung nach einem der Ansprüche 6 bis 8, **dadurch gekennzeichnet, daß** eine Dampfablaßeinrichtung (13, 15) zum Ablassen von Dampf aus dem Garraum (2) vorgesehen ist, mit der einem von der Steuer- oder Regeleinrichtung (7) erzeugbaren und über eine weitere Steuer- oder Regelsignalleitung (14) von der Steuer- oder Regeleinrichtung (7) an die Dampfablaßeinrichtung (13, 15) übermittelbaren Drucksteuer- oder -regelsignal entsprechender Dampf aus dem Garraum (2) ableitbar ist.

10. Vorrichtung nach Anspruch 9, **dadurch gekennzeichnet, daß** die Dampfablaßeinrichtung (13, 15) an eine Ablöscheinriehtung (16) gekoppelt ist, in welche der Dampf aus dem Garraum (2) abgelassen werden kann.

11. Vorrichtung nach einem der Ansprüche 6 bis 10, **dadurch gekennzeichnet, daß** die Vorrichtung einen kippbaren oder verschwenkbaren Tiegel umfaßt.

## Claims

1. Method for controlling or regulating the pressure conditions when cooking food in a cooking space (2) of a cooking device, in particular of a pressure cooker, in which a measured pressure variable which depends on the pressure conditions in the cooking space (2) is measured by means of a pressure-measuring device (8), and a measured pressure signal which is derived from the measured pressure variable is transmitted from the pressure-measuring device (8) to a control or regulating device (7), at least one measured temperature variable is measured by means of a temperature-measuring device (10; 11; 12), a measured temperature signal which is derived from the at least one measured temperature variable is transmitted from the temperature-measuring device (10; 11; 12) to the control or regulating device (7), a temperature control or regulating signal is generated as a function of the at least one measured temperature signal and of the measured pressure signal and transmitted to a heating element (5) by means of the control or regulating device (7), with which heating element a heating power produced for heating the cooking space (2) is controlled or regulated in accordance with the temperature control or regulating signal, and a measured pressure variable for the cooking space (2) which has changed as a result of the controlled or regulated heating power is detected by means of the pressure-measuring device (8), **characterized in that** the measurement of the at least one measured temperature variable includes the measurement of the temperature of liquid in the cooking space (2).

2. Method according to Claim 1, **characterized in that** the measurement of the at least one measured temperature variable includes the measurement of the temperature of steam from the cooking space (2).

3. Method according to Claim 1 or 2, **characterized in that** the measurement of the at least one measured temperature variable includes the measurement of the temperature of the heating element (5).

4. Method according to one of the preceding claims, **characterized in that** a pressure control or regulating signal is generated as a function of the at least one measured temperature signal and the measured pressure signal and transmitted to a steam discharge device (13, 15) for discharging steam from the cooking space (2) by means of the control or regulating device (7).

5. Method according to Claim 4, **characterized in that** the steam is diverted away into a quenching device (16) by means of the steam discharge device (13, 15).

6. Apparatus for cooking food, in particular in a pressure cooker, having a cooking space (2) for accommodating the food, a pressure-measuring device (8) for measuring a measured pressure variable which depends on the pressure conditions in the cooking space (2) and for deriving a measured pressure signal from the measured pressure variable, a measured pressure signal line (9) for connecting the pressure-measuring device (8) to a control or regulating device (7) for transmitting the measured pressure signal from the pressure-measuring device (8) to the control or regulating device (7), a temperature-measuring device (10; 11; 12) for measuring at least one measured temperature variable and for deriving from the measured temperature variable a measured temperature signal to be transmitted to the control or regulating device (7), a unit, which is part of the control or regulating device (7), for generating a temperature control or regulating signal as a function of the measured pressure signal and the measured temperature signal, and a control or regulating signal line (6) for connecting the control or regulating device (7) to a heating element (5) in order to transmit the temperature control or regulating signal from the control or regulating device (7) to the heating element (5), with which a heating power produced for heating the cooking space (2) can be controlled or regulated in accordance with the temperature control signal in order to control or regulate the pressure conditions in the cooking space (2), **characterized in that** the temperature-measuring device comprises a liquid temperature sensor (11) for measuring the liquid temperature in the cooking space (2).

7. Apparatus according to Claim 6, **characterized in that** the temperature-measuring device comprises a steam temperature sensor (10) for measuring the temperature of steam from the cooking space (2).

8. Apparatus according to either of Claims 6 and 7, **characterized in that** the temperature-measuring device comprises a further temperature sensor (12) for measuring the temperature of the heating element (5).

9. Apparatus according to one of Claims 6 to 8, **characterized in that** a steam discharge device (13, 15) for discharging steam from the cooking space (2) is provided, by means of which steam can be discharged from the cooking space (2) in accordance with a pressure control or regulating signal which can be generated by the control or regulating device (7) and can be transmitted from the control or regulating. device (7) to the steam discharge device (13, 15) via a further control or regulating signal line (14).

10. Apparatus according to Claim 9, **characterized in that** the steam discharge device (13, 15) is coupled to a quenching device (16) into which the steam from the cooking space (2) can be discharged.

11. Apparatus according to one of Claims 6 to 10, **characterized in that** the apparatus comprises a tiltable or pivotable pan.

## Revendications

1. Procédé de commande ou de régulation des conditions de pression lors de la cuisson d'un produit alimentaire placé dans une enceinte de cuisson (2) d'un four de cuisson, en particulier d'une casserole à pression, dans lequel, à l'aide d'un dispositif de mesure de pression (8), une grandeur de mesure de pression, dépendant des conditions de pression régnant dans l'enceinte de cuisson (2), est mesurée et un signal de mesure de pression, dérivé de la grandeur de mesure de pression, est transmis par le dispositif de mesure de pression (8) à un dispositif de commande ou de régulation (7), à l'aide d'un dispositif de mesure de température (10; 11; 12), au moins une grandeur de mesure de température mesurée, un signal de mesure de température, dérivé de la au moins une grandeur de mesure de température, est transmis, par le dispositif de mesure de température (10; 11; 12), au dispositif de commande ou de régulation (7), en fonction du au moins un signal de mesure de température et du signal de mesure de pression, à l'aide du dispositif de commande ou de régulation (7), un signal de commande ou de régulation de température est produit et transmis à un élément chauffant (5), à l'aide desquels une puissance de chauffage, produite pour chauffer l'enceinte de cuisson (2), est commandée ou régulée, de manière correspondante au signal de commande ou de régulation de température, et une grandeur de mesure de pression, modifiée par suite de la puissance de chauffage commandée ou régulée, est détectée pour l'enceinte de cuisson (2), à l'aide du dispositif de mesure de pression (8), **caractérisé en ce que** la mesure de la au moins une grandeur de mesure de température comprend la mesure d'une température de liquide, concernant le liquide présent dans l'enceinte de cuisson (2).

2. Procédé selon la revendication 1, **caractérisé en ce que** la mesure de la au moins une grandeur de mesure de température comprend la mesure de la température de vapeur, concernant la vapeur, concernant la vapeur émanant de l'enceinte de cuisson (2).

3. Procédé selon la revendication 1 ou 2, **caractérisé en ce que** la mesure de la au moins une grandeur de mesure de température comprend la mesure d'une température d'élément chauffant, de l'élément chauffant (5).

4. Procédé selon l'une des revendications précédentes, **caractérisé en ce que**, à l'aide du dispositif de commande ou de régulation (7), en fonction du au moins un signal de mesure de température et du signal de mesure de pression, un signal de commande ou de régulation de pression est produit et est transmis à un dispositif d'échappement de vapeur (13, 15), pour permettre l'échappement de vapeur depuis l'enceinte de cuisson (2).

5. Procédé selon la revendication 4, **caractérisé en ce que** la vapeur est dérivée dans un dispositif d'extinction (16) à l'aide du dispositif d'échappement de vapeur (13, 15).

6. Dispositif de cuisson d'un produit alimentaire, en particulier dans une casserole à pression, avec une enceinte de cuisson, pour recevoir le produit alimentaire, un dispositif de mesure de pression (8), pour mesurer une grandeur de mesure de pression, dépendant d'une condition de pression dans l'enceinte de cuisson (2), et pour dériver un signal de mesure de pression de la grandeur de mesure de pression, une ligne de signalisation de mesure de pression (9), pour assurer la liaison du dispositif de mesure de pression (8) à un dispositif de commande ou de régulation (7) pour une transmission du signal de mesure de pression, du dispositif de mesure de pression (8) au dispositif de commande ou de régulation (7), un dispositif de mesure de température (10; 11; 12), pour mesurer au moins une grandeur de mesure de température et pour dériver un signal de mesure de température à transmettre au dispositif de commande ou de régulation (7), à partir de la grandeur de mesure de température, une unité, comprise par le dispositif de commande ou de régulation (7), pour produire un signal de commande ou de régulation de température, en fonction du signal de mesure de pression et du signal de mesure de température, et une ligne de signal de commande ou de régulation (6), pour assurer la liaison du dispositif de commande ou de régulation (7) à un élément chauffant (5), pour la transmission du signal de commande ou de régulation de température, du dispositif de commande ou de régulation (7) à l'élément chauffant (5), avec lequel, pour commander ou réguler les conditions de pression dans l'enceinte de pression (2), une puissance de chauffage, produite pour chauffer l'enceinte de cuisson (2), peut être commandée ou régulée de manière correspondante au signal de commande de température, **caractérisé en ce que** le dispositif de mesure de température comprend un capteur de température de liquide (11), pour mesurer une température de liquide dans l'enceinte de cuisson (2).

7. Dispositif selon la revendication 6, **caractérisé en ce que** le dispositif de mesure de température comprend un capteur de température de vapeur (10), pour mesurer une température de vapeur, concernant la vapeur émanant de l'enceinte de cuisson (2).

8. Dispositif selon l'une des revendications 6 ou 7, **caractérisé en ce que** le dispositif de mesure de température comprend un autre capteur de température (12) pour mesurer une température de l'élément chauffant (5).

9. Dispositif selon l'une des revendications 6 à 8, **caractérisé en ce qu'**est prévu un dispositif d'échappement de vapeur (13, 15), devant assurer l'échappement de la vapeur émanant de l'enceinte de combustion (2), à l'aide duquel on peut obtenir une lecture d'un signal de commande ou de régulation de pression, susceptible d'être produit par le dispositif de commande ou de régulation (7) et susceptible d'être transmis au dispositif d'échappement de vapeur (13, 15), depuis le dispositif de commande ou de régulation (7), par l'intermédiaire d'une autre ligne de signal de commande ou de régulation (14), de manière correspondante à de la vapeur dérivable de l'enceinte de cuisson (2).

10. Dispositif selon la revendication 9, **caractérisé en ce que** le dispositif d'échappement de vapeur (13, 15) est couplé à un dispositif d'extinction (16), dans lequel la vapeur, issue de l'enceinte de cuisson (2), peut être laissée s'échapper.

11. Dispositif selon l'une des revendications 6 à 10, **caractérisé en ce que** le dispositif comprend une casserole basculante ou pivotante.
